# EUROPÄISCHE PATENTSCHRIFT

(11) **EP 3 797 315 B1**
(45) Veröffentlichungstag und Bekanntmachung des Hinweises auf die Patenterteilung: **11.08.2021**
(21) Anmeldenummer: 19765223.3
(22) Anmeldetag: 04.09.2019
(51) Int. Cl.: G01S 15/96, G01S 17/88

(54) **FISCHBEOBACHTUNGSVORRICHTUNG**
FISH OBSERVATION APPARATUS
DISPOSITIF D'OBSERVATION DE POISSONS

(30) Priorität: 05.09.2018 DE 102018215051
(43) Veröffentlichungstag der Anmeldung: 31.03.2021
(73) Patentinhaber: ATLAS MARIDAN ApS, 2960 Rungsted Kyst (DK); thyssenkrupp Marine Systems GmbH, 24143 Kiel (DE); thyssenkrupp AG, 45143 Essen (DE)
(72) Erfinder: SCHIEMANN, Marc, 24145 Kiel (DE); ABILDGAARD, Max, 28205 Bremen (DE)
(74) Vertreter: thyssenkrupp Intellectual Property GmbH
(86) Internationale Anmeldenummer: PCT/EP2019/073499
(87) Internationale Veröffentlichungsnummer: WO 2020/049007

(56) Entgegenhaltungen:
- EP-A1- 2 777 390
- EP-A1- 3 316 220
- GB-A- 2 539 495
- US-A1- 2017 105 397

## Beschreibung

Die Erfindung betrifft eine Fischbeobachtungsvorrichtung mit wenigstens einem ersten optischen Sensor und wenigstens einem zweiten Sensor.

Aus der US 6,343,433 B1 ist ein Schleppnetz für ein Fischereiboot bekannt.

Aus der US 2014/0259864 A1 ist ein Fischsortierungssystem bekannt.

Aus der US 2015/0156998 A1 ist ein Fischereisystem mit wenigstens einem Sensor bekannt.

Aus der US 2017/0105397 A1 ist eine Vorrichtung zu Beobachtung von Fischereifang mit einem Sensor und einer Lichtquelle bekannt.

Aus der nachveröffentlichten DE 10 2017 216 608 B3 ist ein Verfahren zur Verminderung von Beifang unter Verwendung eines Fischbeobachtungswasserfahrzeugs bekannt.

Aus der EP 3 316 220 A1 ist eine Methode zur Bestimmung der Biomasse an Thunfisch in einem Bereich bekannt.

Aus der GB 2539495 A ist eine Time-of-Flight Kamera zur Bestimmung von Position, Anzahl, Tiefe, Größe, Form oder Masse von frei beweglichen Objekten, insbesondere Fischen, bekannt.

Aus der EP 2 777 390 A1 ist ein Fischsortiersystem zum Sortieren von Fisch in einem Schleppnetz bekannt.

Es ist jedoch problematisch, dass auch insbesondere zu junge, also zu kleine Fische gefangen werden. Neben gesetzlichen Regelungen vermindert das auch das Fischereiergebnis insgesamt. Es ist somit wünschenswert, auch zu kleine Fische nicht zu fangen.

Aufgabe der Erfindung ist es, zuverlässig den Beifang auch unter Berücksichtigung der Fischgröße zu vermeiden.

Gelöst wird diese Aufgabe durch ein Fischbeobachtungsvorrichtung mit den in Anspruch 1 angegebenen Merkmalen sowie das Verfahren mit den in Anspruch 11 angegebenen Merkmalen. Vorteilhafte Weiterbildungen ergeben sich aus den Unteransprüchen, der nachfolgenden Beschreibung sowie den Zeichnungen.

Die erfindungsgemäße Fischbeobachtungsvorrichtung weist wenigstens einen ersten optischen Sensor und wenigstens einen zweiten Sensor auf. Der erste optische Sensor ist zur optischen Erfassung wenigstens eines ersten Fisches ausgebildet. Der wenigstens eine zweite Sensor ist zur Erfassung der Position des wenigstens einen ersten Fisches ausgebildet. Die Fischbeobachtungsvorrichtung weist wenigstens eine erste Datenverarbeitungsvorrichtung auf, wobei die erste Datenverarbeitungsvorrichtung zur Auswertung der erfassten Daten des wenigstens einen ersten optischen Sensors und zur Auswertung der Daten des wenigstens einen zweiten Sensors ausgebildet ist, wobei die erste Datenverarbeitungsvorrichtung aus der mit dem wenigstens einen zweiten Sensor ermittelten Position des ersten Fisches und den erfassten optischen Daten des wenigstens einen ersten Sensors die Größe des Fisches ermittelt.

Ein optischer Sensor erfasst ein zweidimensionales Abbild. Die Größe des Fisches ist vom Abstand (bei ansonsten unveränderten Parametern, insbesondere bei konstanter Brennweite) abhängig. Die Größe des Fisches kann also aus der Abbildung, welche der erste optische Sensor erzeugt, nicht direkt ermittelt werden. Ist der Abstand jedoch bekannt, kann die reale Größe des Fisches anhand der optischen Parameter des ersten optischen Sensors direkt errechnet werden.

Es kann vorgesehen sein das der erste und/oder der zweite Sensor mehrere Fische pro Messung erfassen. Die Datenverarbeitungsvorrichtung ordnet dann die Messungen des ersten Sensors den Messungen des zweiten Sensors zu.

Als zweiter Sensor zur Erfassung der Position können verschiedene Arten von Sensoren eingesetzt werden. Erfindungsgemäß ist der zweite Sensor ein erstes Sonar. Mit Hilfe von Sonar können Positionen von Objekten vergleichsweise gut bestimmt werden. Besonders bevorzugt ist das erste Sonar ein Aktivsonar. Zusätzlich kann der zweite Sensor ein Laserscanner sein. Zusätzlich kann der zweite Sensor ein zweiter optischer Sensor sein, sodass der erste optische Sensor und der zweite optische Sensor beispielsweise eine Stereokamera bilden und so die Bestimmung des Abstandes ermöglichen, der erste optische Sensor und der zweite optische Sensor können auch gemeinsam verbaut sein, beispielsweise in Form einer Lichtfeldkamera.

Beispielsweise kann der erste optische Sensor in einem Bereich von 175 nm bis 1300 nm erfassen, bevorzugt von 300 nm bis 1100 nm, weiter bevorzugt von 400 nm bis 800 nm. In diesem Bereich können insbesondere handelsübliche CMOS oder CCD Sensoren kostengünstig eingesetzt werden.

Beispielweise kann der erste Sensor in einem Bereich von 570 nm bis 1,3 µm, bevorzugt in einem Bereich von 700 nm bis 1,3 µm, besonders bevorzugt in einem Bereich von 800 nm bis 1,1 um erfassen. Die Verwendung von roten und/oder infrarotem Licht reduziert zum einen den Einfluss von Umgebungslicht (geringere Eindringtiefe des Sonnenlichts). Zum anderen stört eine künstliche Beleuchtung in diesem Bereich Fische in der Umgebung weniger.

In einer weiteren Ausführungsform der Erfindung wird der erste optische Sensor nur aktiviert, wenn der zweite Sensor wenigstens einen ersten Fisch im Detektionsbereich des ersten optischen Sensors erfasst. Beispielsweise und insbesondere ist der erste Sensor ein erstes Sonar. Hierdurch kann Strom für den ersten optischen Sensor sowie für die Auswertung der optisch erfassten Daten gespart werden.

In einer weiteren Ausführungsform der Erfindung ist die erste Datenverarbeitungsvorrichtung zur Auswertung der erfassten Daten des wenigstens einen ersten optischen Sensors ausgebildet ist, wobei die erste Datenverarbeitungsvorrichtung die Fischart des wenigstens eines ersten Fisches ermittelt.

In einer weiteren Ausführungsform der Ausführungsform erfasst die Datenverarbeitungseinrichtung die Anzahl der Fische jeder Fischart. Es kann weiterhin oder alternativ vorgesehen sein, dass die Datenverarbeitungseinrichtung einen Anteil einer bestimmten Fischart an der Gesamtheit der gemessenen Fische bestimmt beziehungsweise erfasst.

In einer weiteren Ausführungsform der Erfindung ist vorgesehen, dass die erste Datenverarbeitungsvorrichtung die Anzahl der vom wenigstens eine ersten und/oder einen zweiten Sensor erfassten Fische ermittelt. Insbesondere wird die Anzahl der Fische pro Zeiteinheit ermittelt.

In einer weiteren Ausführungsform der Erfindung ist vorgesehen, dass die erste Datenverarbeitungsvorrichtung eine Mehrzahl Daten der Sensoren erfasst und eine Ermittlung der statistischen Verteilung der Fischgrößen vornimmt.

In einer weiteren Ausführungsform der Erfindung ist vorgesehen, dass die Datenverarbeitungsvorrichtung einen Mittelwert, einen Median und/oder eine Standardabweichung der Fischgrößen bestimmt.

Weiter kann vorgesehen sein, dass die Datenverarbeitungsvorrichtung eine Fischfangvorrichtung automatisch ansteuert, wenn die Fischart mit einer bestimmten Fischart übereinstimmt und die Fischgröße, insbesondere der Mittelwert, der Median oder die Fischgröße in Kombination mit dessen Standardabweichung, oberhalb eines Grenzwertes ist.

In einer weiteren Ausführungsform der Erfindung weist Fischbeobachtungsvorrichtung wenigstens eine zweite Datenverarbeitungsvorrichtung auf, wobei die zweite Datenverarbeitungsvorrichtung zur Auswertung der erfassten Daten des wenigstens einen ersten optischen Sensors ausgebildet ist, wobei die zweite Datenverarbeitungsvorrichtung die Fischart des wenigstens eines ersten Fisches ermittelt.

In einer weiteren Ausführungsform der Erfindung weist die Fischbeobachtungsvorrichtung wenigstens ein erstes Leuchtmittel auf, wobei das wenigstens eine erste Leuchtmittel zur Ausleuchtung wenigstens eines Teilbereichs des vom wenigstens einen ersten optischen Sensors optisch erfassten Bereichs ausgebildet ist. Als erstes Leuchtmittel können Dauerlicht oder Blitzlicht eingesetzt werden. Als bevorzugtes Dauerlicht wird ein LED-Leuchtmittel verwendet. Blitzlicht ist bevorzugt, um die Bewegung des ersten Fisches optisch einzufrieren. Vorteil ist hier, dass nicht die Belichtungszeit des ersten optischen Sensors sondern die Abbrennzeit des Blitzlichtes für eine scharfe Abbildung des ersten Fisches relevant ist.

In einer weiteren Ausführungsform der Erfindung emittiert das wenigstens eine erste Leuchtmittel in einem Bereich von 570 nm bis 1,3 µm, bevorzugt in einem Bereich von 700 nm bis 1,3 µm, besonders bevorzugt in einem Bereich von 800 nm bis 1,1 µm. Hierunter wird im Sinne der Erfindung verstanden, dass wenigstens 95 % der emittierten Strahlung in diesem Bereich liegen. Eine Emission im roten Bereich, also zwischen 570 nm und 700 nm, stört die Fische bereits weniger, da hier eine Blendung der Fischer vermieden wird. Sensoren insbesondere auf Silizium-Basis weisen eine gute Empfindlichkeit auf, welche aber in diesen Bereichen bis 1100 nm abnimmt. Für den Bereich bis 1300 nm können dann zum Beispiel InGaAs Sensoren verwendet werden.

In einer weiteren Ausführungsform der Erfindung ist das wenigstens eine erste Leuchtmittel vom wenigstens einen ersten optischen Sensor beabstandet.

Der wenigstens eine erste optische Sensor weist eine Haupterfassungsrichtung auf und das wenigstens eine erste Leuchtmittel weist eine Hauptbelichtungsrichtung auf. Die Haupterfassungsrichtung des ersten optischen Sensors entspricht im Sinne der Erfindung der optischen Achse. Analog ist die Hauptbelichtungsrichtung des ersten Leuchtmittels im Sinne der Erfindung die Richtung, in welche das Leuchtmittel abstrahlt, wobei es sich hierbei üblicherweise um die Hauptachse eines Abstrahlkegels handelt.

In einer weiteren Ausführungsform der Erfindung ist das wenigstens ein erstes Leuchtmittel in einem dritten Gehäuse angeordnet.

In einer weiteren Ausführungsform der Erfindung sind alle Komponenten der Fischbeobachtungsvorrichtung in einem Gesamtgehäuse untergebracht. Besonders bevorzugt ist das Gesamtgehäuse ein autonomes Unterwasserfahrzeug, eine Boje, beispielsweise ein autonomer Drifter, oder eine stationäre Unterwassereinrichtung zur Fischbeobachtung. Stationäre Einrichtungen, welche dafür genutzt werden können sind beispielsweise Bohrinseln oder Windparks.

In einer weiteren alternativen Ausführungsform der Erfindung weist die Fischbeobachtungsvorrichtung wenigstens ein erstes Gehäuse und wenigstens ein zweites Gehäuse auf. Das erste Gehäuse weist den ersten optischen Sensor auf und das zweite Gehäuse weist den zweiten Sensor auf. Das erste Gehäuse und das zweite Gehäuse liegen örtlich getrennt vor.

In einer bevorzugten Ausführungsform der Erfindung sind das erste Gehäuse und das zweite Gehäuse am Kopftau angeordnet.

In einer weiteren Ausführungsform der Erfindung ist die Fischfangvorrichtung Bestandteil eines Fischfangwasserfahrzeugs, wobei das Fischfangwasserfahrzeug einen Schiffskörper und ein Netz aufweist. Der Schiffskörper bildet das zweite Gehäuse und das erste Gehäuse ist am Netz angeordnet. Diese Ausführungsform ist besonders bevorzugt, wenn als zweiter Sensor das im Fischfangwasserfahrzeug vorhandene Sonar als zweiter Sensor verwendet wird. Selbstverständlich kann das Fischfangwasserfahrzeug zusätzlich ein weiteres Sonar, beispielsweise ein Bugsonar aufweisen, welches zur Navigation verwendet werden kann.

In einer weiteren Ausführungsform der Erfindung ist das wenigstens eine erste Gehäuse am Kopftau des Netzes angeordnet, wobei die Haupterfassungsrichtung des ersten optischen Sensors in einem Winkel zwischen der Horizontalen in Fahrtrichtung und der Senkrechten zum Grund ausgerichtet ist. Weist die Fischbeobachtungsvorrichtung auch ein drittes Gehäuse auf, so ist auch das dritte Gehäuse vorzugsweise am Kopftau angeordnet. Alternativ kann vorgesehen sein, dass das erste Gehäuse zwischen dem Netz und dem Fischfangfahrzeug insbesondere an der Kurrleine positioniert/angebracht ist.

Ein Schleppnetz weist üblicherweise eine große vordere Öffnung auf. Diese ist oben durch das Kopftau und unten durch das Grundtau begrenzt. Zusätzlich kann das Netz am hinteren Ende einen öffenbaren und verschließbaren Steert aufweisen.

In einer weiteren Ausführungsform der Erfindung sind wenigstens zwei erste Gehäuse am Kopftau des Netzes angeordnet. Bei großen Netzen sind besonders bevorzugt mehrere erste Gehäuse am Kopftau angeordnet. Insbesondere für Gewässer mit schlechten Sichtverhältnissen können zusätzlich mehrere erste Gehäuse auch am Grundtau angeordnet werden, wobei die Haupterfassungsrichtung der am Grundtau angeordneten ersten optischen Sensors in einem Winkel zwischen der Horizontalen in Fahrtrichtung und der Senkrechten zur Wasseroberfläche ausgerichtet ist. Erste Gehäuse können natürlich nicht am Grundtau angeordnet werden, wenn dieses dazu dient, tatsächlich über den Grund gezogen zu werden und daher beispielsweise als Kette ausgeführt ist.

In einer weiteren Ausführungsform der Erfindung erfolgt die Datenübertragung zwischen dem ersten Gehäuse und dem zweiten Gehäuse akustisch, mit einem Datenkabel, mittel elektromagnetischer Wellen. Die Übertragung mit einem Datenkabel ermöglicht die größte Datenbandbreite, erfordert aber eine zusätzliche Installation. Da jedoch Schleppseile bei einem Netz vorhanden sind, ist die Installation dennoch vergleichsweise einfach, auf eine Verstärkung des Datenkabels aufgrund der hohen Zugkräfte ist zu achten. Die akustische Datenübertragung ist die geringste Übertragungsrate, hat dafür aber deutlich geringer und ist vergleichsweise robust, es muss jedoch ein Empfänger im Schiffsrumpf untergebracht werden. Eine Datenübertragung mit elektromagnetischen Wellen ist regelmäßig nicht direkt möglich, hierfür ist das erste Gehäuse insbesondere mit einer Boje verbunden, wobei die Boje eine Antenne zur Datenübertragung aufweist, wobei hier das Verfangen der Boje im Netz verhindert werden muss.

In einer weiteren Ausführungsform der Erfindung erfolgt die Datenübertragung nicht direkt zwischen dem ersten Gehäuse und dem zweiten Gehäuse, sondern das erste Gehäuse und das zweite Gehäuse übertragen die Daten eine Datenauswertevorrichtung, wobei die Datenauswertevorrichtung bevorzugt in einem Fischfangwasserfahrzeug angeordnet ist. Besonders bevorzugt erfolgt die Kommunikation zwischen dem ersten Gehäuse und der Datenauswertevorrichtung sowie zwischen dem zweiten Gehäuse und der Datenauswertevorrichtung akustisch.

In einer weiteren Ausführungsform der Erfindung ist die Fischbeobachtungsvorrichtung Bestandteil einer Aquakultur und dient zur Überwachung des Fischbestandes und zur Kontrolle des Aufzuchterfolges.

In einem weiteren Aspekt ist die Fischbeobachtungsvorrichtung Bestandteil einer Durchlassvorrichtung. In Abhängigkeit von der durch die Fischbeobachtungsvorrichtung erkannten Fischart und/oder Fischgröße wird die Durchlassvorrichtung geöffnet oder geschlossen. Auf diese Weise können beispielsweise Fische, welche nicht gefangen werden sollen, erkannt und über eine Schleuse (als eine Art der Durchlassvorrichtung) in die Freiheit gelangt werden. Hierdurch kann Beifang aktiv reduziert werden. In Fischfarmen (Aquakulturen) können durch solche Durchlassvorrichtungen Fische, welche eine gewisse Zielgröße erreicht oder überschritten haben, in ein weiteres Gehege gelangen, beispielsweise um anders gefüttert oder gefischt zu werden. Ebenso können so Fische, welche beispielsweise ungewollt in eine Fischfarm gelangt sind, so aus dieser wieder entlassen werden. Hierdurch kann ein ungewolltes Füttern von nicht gezielt gezüchteten Fischen reduziert werden.

In einem Aspekt betrifft die Erfindung ein Verfahren zur Bestimmung der Größe wenigstens eines ersten Fisches mit einer erfindungsgemäßen Fischbeobachtungsvorrichtung, wobei das Verfahren die folgenden Schritte aufweist:
a) Bestimmen einer ersten Position eines ersten Fisches mittels eines zweiten Sensors,
b) Erfassen eines Bildes des ersten Fisches mit einem ersten optischen Sensor,
c) Ermitteln der realen Größe des ersten Fisches aus den in Schritt a) und Schritt b) erfassten Daten.

In einer weiteren Ausführungsform der Erfindung wird aus den in Schritt b) erfassten Daten in Schritt
d) die Fischart des ersten Fisches ermittelt.

In einer weiteren Ausführungsform der Erfindung wird aus den in Schritt b) erfassten Daten in Schritt
e) die Anzahl der Fische ermittelt.

In einer weiteren Ausführungsform der Erfindung wird aus den in Schritt c) und/oder Schritt d) und/oder Schritt e) ermittelten Informationen entschieden, ob ein Fischereivorgang begonnen oder beendet wird. Beispielsweise weist das Netz einen verschließbaren Steert auf. Dieser wird erst verschlossen, wenn die richtige Fischart in der richtigen Größe vor dem Netz ist. Tauchen andere Fischarten oder zu kleine Fische auf, so kann der Fischereivorgang über das Einholen des Netzes beendet werden.

In einer weiteren Ausführungsform der Erfindung erfolgt in Schritt b) eine Blitzbeleuchtung des ersten Fisches. Beispielsweise kann die Blitzbeleuchtung synchronisiert erfolgen. Alternativ kann der erste optische Sensor eine lange Belichtungszeit verwenden, wobei ein kurzer Blitz innerhalb der Belichtungszeit erfolgt. Beispielsweise wird die die Blitzfrequenz etwas geringer gewählt als die Belichtungszeit, beispielsweise 100 ms Belichtungszeit mit 100 ms Dunkelzeit und 5 Hz Blitzfrequenz mit einer Abbrennzeit von 1 ms.

Nachfolgend ist die erfindungsgemäße Fischbeobachtungsvorrichtung anhand eines in den Zeichnungen dargestellten Ausführungsbeispiels näher erläutert.
- Fig. 1: Fischbeobachtungsvorrichtung am Schleppnetz
- Fig. 2: Fischbeobachtungsvorrichtung in einem AUV

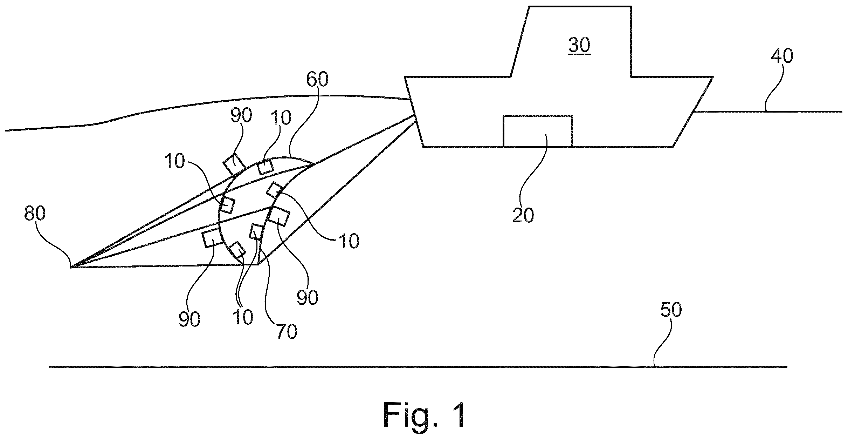

In Fig. 1 ein Fischfangwasserfahrzeug 30 mit geschleppten Netz, wobei das Netz eine Kopftau 60 und ein Grundtau 70 sowie einen Steert 80 aufweist. Wasseroberfläche 40 und Grund 50 begrenzen den interessanten Bereich. Am Kopftau 60 und am Grundtau 70 sind erste Gehäuse 10 mit ersten optischen Sensoren angeordnet. Zusätzlich sind dritte Gehäuse 90 mit Leuchtmitteln dort angeordnet. Die ersten Gehäuse 10 und die dritten Gehäuse 90 sind beabstandet, damit Haupterfassungsrichtung und Hauptbelichtungsrichtung auseinanderfallen. Das Fischfangwasserfahrzeug 30 weist einen zweiten Sensor 20, erfindungsgemäß ein Sonar, auf.

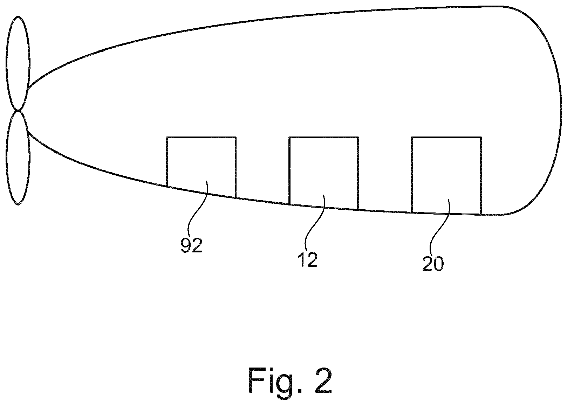

Fig. 2 zeigt ein Fischbeobachtungswasserfahrzeug in der Ausführungsform eines unbemannten Unterwasserfahrzeugs. Dieses weist einen ersten optischen Sensor 12, einen zweiten Sensor 20, erfindungsgemäß ein Sonar, und ein Leuchtmittel 92 auf.

### Bezugszeichen

- 10: erstes Gehäuse
- 12: erster optischer Sensor
- 20: zweiter Sensor
- 30: Fischfangwasserfahrzeug
- 40: Wasseroberfläche
- 50: Grund
- 60: Kopftau
- 70: Grundtau
- 80: Steert
- 90: drittes Gehäuse
- 92: Leuchtmittel

## Patentansprüche

1. Fischbeobachtungsvorrichtung, wobei die Fischbeobachtungsvorrichtung wenigstens einen ersten optischen Sensor (12) und wenigstens einen zweiten Sensor (20) aufweist, wobei der erste optische Sensor (12) zur optischen Erfassung wenigstens eines ersten Fisches ausgebildet ist, wobei der wenigstens eine zweite Sensor (20) zur Erfassung der Position des wenigstens einen ersten Fisches ausgebildet ist, wobei die Fischbeobachtungsvorrichtung wenigstens eine erste Datenverarbeitungsvorrichtung aufweist, wobei die erste Datenverarbeitungsvorrichtung zur Auswertung der erfassten Daten des wenigstens einen ersten optischen Sensors (12) und zur Auswertung der Daten des wenigstens einen zweiten Sensors (20) ausgebildet ist, wobei die erste Datenverarbeitungsvorrichtung aus der mit dem wenigstens einen zweiten Sensor (20) ermittelten Position des ersten Fisches und den erfassten optischen Daten des wenigstens einen ersten Sensors (12) die Größe des Fisches ermittelt, **dadurch gekennzeichnet, dass** der wenigstens eine zweite Sensor (20) ein erstes Sonar ist.

2. Fischbeobachtungsvorrichtung nach Anspruch 1, **dadurch gekennzeichnet, dass** die Fischbeobachtungsvorrichtung wenigstens ein erstes Leuchtmittel (92) aufweist, wobei das wenigstens eine erste Leuchtmittel (92) zur Ausleuchtung wenigstens eines Teilbereichs des vom wenigstens einen ersten optischen Sensors (12) optisch erfassten Bereichs ausgebildet ist.

3. Fischbeobachtungsvorrichtung nach Anspruch 1, **dadurch gekennzeichnet, dass** das wenigstens eine erste Leuchtmittel (92) vom wenigstens einen ersten optischen Sensor (12) beabstandet ist.

4. Fischbeobachtungsvorrichtung nach einem der vorstehenden Ansprüche, **dadurch gekennzeichnet, dass** die Fischbeobachtungsvorrichtung wenigstens ein erstes Gehäuse (10) aufweist, wobei die Fischbeobachtungsvorrichtung wenigstens ein zweites Gehäuse aufweist, wobei das erste Gehäuse (10) den ersten optischen Sensor (12) aufweist, wobei das zweite Gehäuse den zweiten Sensor (20) aufweist, wobei das erste Gehäuse (10) und das zweite Gehäuse örtlich getrennt vorliegen.

5. Fischbeobachtungsvorrichtung nach Anspruch 4, **dadurch gekennzeichnet, dass** die Fischfangvorrichtung Bestandteil eines Fischfangwasserfahrzeugs (30) ist, wobei das Fischfangwasserfahrzeug (30) einen Schiffskörper und ein Netz aufweist, wobei der Schiffskörper das zweite Gehäuse bildet, wobei das erste Gehäuse (10) am Netz angeordnet ist.

6. Fischbeobachtungsvorrichtung nach Anspruch 5, **dadurch gekennzeichnet, dass** das wenigstens eine erste Gehäuse (10) am Kopftau (60) des Netzes angeordnet ist, wobei die Haupterfassungsrichtung des ersten optischen Sensors (12) in einem Winkel zwischen der Horizontalen in Fahrtrichtung und der Senkrechten zum Grund (50) ausgerichtet ist.

7. Fischbeobachtungsvorrichtung nach Anspruch 6, **dadurch gekennzeichnet, dass** wenigstens zwei erste Gehäuse (10) am Kopftau (60) des Netzes angeordnet sind.

8. Fischbeobachtungsvorrichtung nach einem der Ansprüche 4 bis 7, **dadurch gekennzeichnet, dass** die Datenübertragung zwischen dem ersten Gehäuse (10) und dem zweiten Gehäuse akustisch, mit einem Datenkabel, mittels elektromagnetischer Wellen erfolgt.

9. Fischbeobachtungsvorrichtung nach einem der Ansprüche 4 bis 8, **dadurch gekennzeichnet, dass** das erste Gehäuse (10) mit einer Boje verbunden ist, wobei die Boje eine Antenne zur Datenübertragung aufweist.

10. Verfahren zur Bestimmung der Größe wenigstens eines ersten Fisches mit einer Fischbeobachtungsvorrichtung nach einem der vorstehenden Ansprüche, wobei das Verfahren die folgenden Schritte aufweist:
a) Bestimmen einer ersten Position eines ersten Fisches mittels eines zweiten Sensors (20), wobei der zweite Sensor ein erstes Sonar ist,
b) Erfassen eines Bildes des ersten Fisches mit einem ersten optischen Sensor (12),
c) Ermitteln der realen Größe des ersten Fisches aus den in Schritt a) und Schritt b) erfassten Daten.

11. Verfahren nach Anspruch 10, **dadurch gekennzeichnet, dass** aus den in Schritt
b) erfassten Daten in Schritt
d) die Fischart des ersten Fisches ermittelt wird.

12. Verfahren nach einem der Anspruch 10 bis 11, **dadurch gekennzeichnet, dass** aus den in Schritt b) erfassten Daten in Schritt
e) die Anzahl der Fische ermittelt wird.

13. Verfahren nach einem der Anspruch 10 bis 12, **dadurch gekennzeichnet, dass** aus den in Schritt c) und/oder Schritt d) und/oder Schritt e) ermittelten Informationen entschieden wird, ob ein Fischereivorgang begonnen oder beendet wird.

14. Verfahren nach einem der Anspruch 10 bis 13, **dadurch gekennzeichnet, dass** das in Schritt b) eine Blitzbeleuchtung des ersten Fisches erfolgt.

## Claims

1. Fish observation apparatus, wherein the fish observation apparatus has at least one first optical sensor (12) and at least one second sensor (20), wherein the first optical sensor (12) is embodied for optically capturing at least one first fish, wherein the at least one second sensor (20) is embodied for capturing the position of the at least one first fish, wherein the fish observation apparatus has at least one first data processing apparatus, wherein the first data processing apparatus is embodied for evaluating the captured data of the at least one first optical sensor (12) and for evaluating the data of the at least one second sensor (20), wherein the first data processing apparatus ascertains the size of the fish from the position of the first fish, which has been ascertained using the at least one second sensor (20), and from the captured optical data of the at least one first sensor (12), **characterized in that** the at least one second sensor (20) is a first sonar.

2. Fish observation apparatus according to Claim 1, **characterized in that** the fish observation apparatus has at least one first light-emitting means (92), wherein the at least one first light-emitting means (92) is embodied for fully lighting at least one partial region of the region that is optically captured by the at least one first optical sensor (12).

3. Fish observation apparatus according to Claim 1, **characterized in that** the at least one first light-emitting means (92) is arranged at a distance from the at least one first optical sensor (12).

4. Fish observation apparatus according to one of the preceding claims, **characterized in that** the fish observation apparatus has at least one first housing (10), wherein the fish observation apparatus has at least one second housing, wherein the first housing (10) has the first optical sensor (12), wherein the second housing has the second sensor (20), wherein the first housing (10) and the second housing are spatially separate from one another.

5. Fish observation apparatus according to Claim 4, **characterized in that** the fishing apparatus is an integral part of a fishing vessel (30), wherein the fishing vessel (30) has a hull and a net, wherein the hull forms the second housing, wherein the first housing (10) is arranged at the net.

6. Fish observation apparatus according to Claim 5, **characterized in that** the at least one first housing (10) is arranged at the headline (60) of the net, wherein the main capturing direction of the first optical sensor (12) is aligned at an angle between the horizontal in the movement direction and the perpendicular to the ground (50) .

7. Fish observation apparatus according to Claim 6, **characterized in that** at least two first housings (10) are arranged at the headline (60) of the net.

8. Fish observation apparatus according to one of Claims 4 to 7, **characterized in that** the data transmission between the first housing (10) and the second housing takes place acoustically, with a data cable, by way of electromagnetic waves.

9. Fish observation apparatus according to one of Claims 4 to 8, **characterized in that** the first housing (10) is connected to a buoy, wherein the buoy has an antenna for data transmission.

10. Method for determining the size of at least one first fish using a fish observation apparatus according to one of the preceding claims, wherein the method includes the following steps:
a) determining a first position of a first fish by means of a second sensor (20), wherein the second sensor is a first sonar,
b) capturing an image of the first fish using a first optical sensor (12),
c) ascertaining the real size of the first fish from the data captured in step a) and step b).

11. Method according to Claim 10, **characterized in that** the fish type of the first fish is ascertained in step d) from the data captured in step b).

12. Method according to one of Claims 10 to 11, **characterized in that** the number of fish is ascertained in step e) from the data captured in step b).

13. Method according to one of Claims 10 to 12, **characterized in that** a decision is made, based on the information ascertained in step c) and/or step d) and/or step e), as to whether a fishing operation is started or terminated.

14. Method according to one of Claims 10 to 13, **characterized in that** the first fish is illuminated using a flash in step b).

## Revendications

1. Dispositif d'observation de poissons, le dispositif d'observation de poissons présentant au moins un premier capteur optique (12) et au moins un deuxième capteur (20), le premier capteur optique (12) étant réalisé pour la détection optique d'au moins un premier poisson, ledit au moins un deuxième capteur (20) étant réalisé pour détecter la position de l'au moins un premier poisson, le dispositif d'observation de poissons présentant au moins un premier dispositif de traitement de données, le premier dispositif de traitement de données étant réalisé pour évaluer les données détectées de l'au moins un premier capteur optique (12) et pour évaluer les données de l'au moins un deuxième capteur (20), le premier dispositif de traitement de données établissant la taille du poisson à partir de la position du premier poisson, établie par ledit au moins un deuxième capteur (20), et des données optiques détectées de l'au moins un premier capteur (12),
**caractérisé en ce que** ledit au moins un deuxième capteur (20) est un premier sonar.

2. Dispositif d'observation de poissons selon la revendication 1, **caractérisé en ce que** le dispositif d'observation de poissons présente au moins un premier moyen d'éclairage (92), ledit au moins un premier moyen d'éclairage (92) étant réalisé pour éclairer au moins une partie de la zone détectée optiquement par ledit au moins un premier capteur optique (12).

3. Dispositif d'observation de poissons selon la revendication 1, **caractérisé en ce que** ledit au moins un premier moyen d'éclairage (92) est espacé de l'au moins un premier capteur optique (12).

4. Dispositif d'observation de poissons selon l'une quelconque des revendications précédentes, **caractérisé en ce que** le dispositif d'observation de poissons présente au moins un premier boîtier (10), le dispositif d'observation de poissons présentant au moins un deuxième boîtier, le premier boîtier (10) présentant le premier capteur optique (12), le deuxième boîtier présentant le deuxième capteur (20), le premier boîtier (10) et le deuxième boîtier étant présents séparément à différents endroits.

5. Dispositif d'observation de poissons selon la revendication 4, **caractérisé en ce que** le dispositif de pêche fait partie d'un navire de pêche (30), le navire de pêche (30) présentant une coque et un filet, la coque formant le deuxième boîtier, le premier boîtier (10) étant disposé au niveau du filet.

6. Dispositif d'observation de poissons selon la revendication 5, **caractérisé en ce que** ledit au moins un premier boîtier (10) est disposé au niveau de la ralingue (60) du filet, le dispositif de détection principal du premier capteur optique (12) étant orienté selon un angle entre l'horizontale dans le sens de la marche et la verticale par rapport au fond (50).

7. Dispositif d'observation de poissons selon la revendication 6, **caractérisé en ce qu'**au moins deux premiers boîtiers (10) sont disposés au niveau de la ralingue (60) du filet.

8. Dispositif d'observation de poissons selon l'une quelconque des revendications 4 à 7, **caractérisé en ce que** la transmission de données entre le premier boîtier (10) et le deuxième boîtier est effectuée de manière acoustique, par un câble de données, au moyen d'ondes électromagnétiques.

9. Dispositif d'observation de poissons selon l'une quelconque des revendications 4 à 8, **caractérisé en ce que** le premier boîtier (10) est relié à une bouée, la bouée présentant une antenne pour la transmission de données.

10. Procédé permettant de déterminer la taille d'au moins un premier poisson par un dispositif d'observation de poissons selon l'une quelconque des revendications précédentes, le procédé présentant les étapes suivantes consistant à :
a) déterminer une première position d'un premier poisson au moyen d'un deuxième capteur (20), le deuxième capteur étant un premier sonar,
b) détecter une première image du premier poisson par un premier capteur optique (12),
c) établir la taille réelle du premier poisson à partir des données détectées à l'étape a) et à l'étape b) .

11. Procédé selon la revendication 10, **caractérisé en ce qu'**à l'étape d), l'espèce de poisson du premier poisson est établie à partir des données détectées à l'étape b).

12. Procédé selon l'une quelconque des revendications 10 et 11, **caractérisé en ce qu'**à l'étape e), le nombre des poissons est établi à partir des données détectées à l'étape b).

13. Procédé selon l'une quelconque des revendications 10 à 12, **caractérisé en ce qu'**à partir des informations établies à l'étape c) et/ou à l'étape d) et/ou à l'étape e), il est décidé si une opération de pêche sera lancée ou terminée.

14. Procédé selon l'une quelconque des revendications 10 à 13, **caractérisé en ce qu'**à l'étape b) un éclairage au flash du premier poisson est effectué.
